# EUROPEAN PATENT SPECIFICATION

(11) **EP 2 648 382 B1**
(45) Date of publication and mention of the grant of the patent: **07.01.2015**
(21) Application number: 11853202.7
(22) Date of filing: 26.11.2011
(51) Int. Cl.: H04L 12/24, H04L 12/723, H04L 29/06, H04L 12/703

(54) **METHOD, DEVICE AND SYSTEM FOR ESTABLISHING LSP**
VERFAHREN, VORRICHTUNG UND SYSTEM ZUR LSP-HERSTELLUNG
PROCÉDÉ, DISPOSITIF ET SYSTÈME PERMETTANT D'ÉTABLIR UN CHEMIN À COMMUTATION D'ÉTIQUETTES

(30) Priority: 28.12.2010 CN 201010609033
(43) Date of publication of application: 09.10.2013
(73) Proprietor: Huawei Technologies Co., Ltd., Shenzhen, Guangdong 518129 (CN)
(72) Inventor: ZI, Xiaobing, Shenzhen Guangdong 518129 (CN)
(74) Representative: Lord, Michael
(86) International application number: PCT/CN2011/083004
(87) International publication number: WO 2012/088977

(56) References cited:
- EP-A1- 1 976 198
- CN-A- 1 756 184
- CN-A- 101 616 091
- CN-A- 101 741 709
- CN-A- 102 130 829
- US-A1- 2005 141 504
- US-A1- 2010 111 086
- US-B1- 7 787 380

## Description

### TECHNICAL FIELD

The present invention relates to the technical field of communications, in particular to a method, device and system for setting up an LSP.

### BACKGROUND

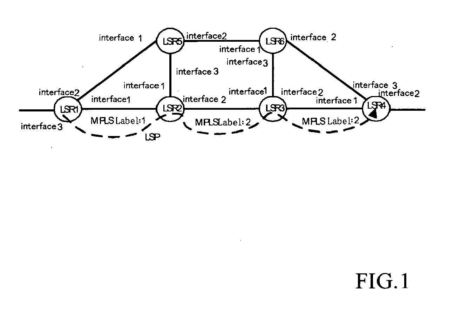

In a Multi-protocol Label Switching (MPLS) network, a Label Switch Path (LSP) may be set up between two nodes for transferring data messages between the two nodes. As shown in FIG. 1, the MPLS network is composed of a Label Switch Router (LSR) and the links therebetween. LSR denotes a Label Switching Router, i.e., a node in the MPLS network, which is capable of forwarding based on the MPLS labels of the MPLS headers in data messages. The links therebetween are responsible for transferring data messages between two LSRs.

An LSP may be set up between two LSRs for transferring data messages. For example, a LSP is set up between LSR1 and LSR4 for transferring data messages from LSR1 to LSR4. The source node of the LSP needs to realize the encapsulating function of the MPLS. For example, the LSP between LSR1 and LSR4 in FIG. 1 is used for transferring the IP data message of a certain destination IP address (D_IP), then after receiving the IP data message of the IP whose the destination address is D_IP, LSR1 encapsulates the IP data message with a MPLS header and sets the MPLS label therein into 1, and then transmits it to LSR2. The intermediate nodes of the LSP need to be capable of forwarding the data message according to the MPLS label in the MPLS header. In order to realize the object, it is necessary to configure a MPLS label forwarding table at the intermediate nodes. The process can be automatically assigned by a signaling protocol (e.g., RSVP and LDP) or realized by a network administrator.

In order to recover rapidly from a LSP failure, such as a LSP failure caused by a link failure between LSR2 and LSR3, two LSPs may be configured between two LSRs either automatically by a signaling protocol or by a network administrator. Since it is necessary to avoid a case of a simultaneous failure of the two LSPs, the two LSPs are separate from each other so as to resist a network primary failure, except a source node or a sink node failure. When the LSPs have the MPLS multicast capability, it is also feasible to set up a point to Multi-Point (P2MP) LSP for transferring data messages from a root node to a plurality of leaf nodes. In order to protect a P2MP LSP, a protecting P2MP LSP may be configured therefor. In order to resist a network primary failure, a working path and a protecting path from the root to each leaf should be separated from each other. In the prior art, different labels are assigned to a working P2MP LSP and a protecting P2MP LSP in the same link, thereby resulting in a severe waste of bandwidth.

US 7787380 B1 discloses techniques for Multi-Protocol Label Switching (MPLS) upstream label assignment for the Resource Reservation Protocol with Traffic Engineering (RSVP-TE). The techniques include extensions to the RSVP-TE that enable distribution of upstream assigned labels in Path messages from an upstream router to two or more downstream routers of tunnel established over a network. The tunnel may comprise a RSVP-TE P2MP Label Switched Path (LSP) or an Internet Protocol (IP) multicast tunnel. The techniques also include extensions to the RSVP-TE that enable a router to advertise upstream label assignment capability to neighboring routers in the network. The MPLS upstream label assignment using RSVP-TE described herein enables a branch router to avoid traffic replication on a Local Area Network (LAN) for RSVP-TE P2MP LSPs.

### SUMMARY

The embodiments of the present invention configure a method, device, and system for setting up an LSP that can improve the utilization rate of the network bandwidth.

A method for setting up a first P2MP LSP, characterized by comprising: receiving by a node a first message from an upstream node, the first message including identification information of a second P2MP LSP, and the first message requesting for setting up the first P2MP LSP, the first P2MP LSP and the second P2MP LSP sharing a label;
when the node is a sink node of the first P2MP LSP, assigning, by the sink node, in an upstream link of the node, a first label to the first P2MP LSP if the second P2MP LSP has the first label in the upstream link of the node; assigning, by the sink node, in the upstream link of the node, a second label to the first P2MP LSP if the second P2MP LSP does not have the label in the upstream link of the node; sending, by the sink node, a second message to the upstream node, the second message carrying the label which is assigned to the first P2MP LSP in the upstream link of the node;
when the node is an intermediate node of the first P2MP LSP, sending, by the intermediate node, the first message to a downstream node, receiving, by the intermediate node, a third message from the downstream node, the third message carrying the label which is assigned to the upstream link of the downstream node by the downstream node; assigning, by the intermediate node, in the upstream link of the node, a third label to the first P2MP LSP if the second P2MP LSP has the third label in the upstream link of the node; assigning, by the intermediate node, in the upstream link of the node, a fourth label to the first P2MP LSP if the second P2MP LSP does not have a label in the upstream link of the node; and sending, by the intermediate node, a fourth message to the upstream node, the fourth message carrying the label which is assigned to the first P2MP LSP in the upstream link of the node

A device for setting up a first P2MP LSP, characterized by comprising:
a receiving unit for receiving a first message from an upstream node, the first message including identification information of a second P2MP LSP and the first message requesting for setting up the first P2MP LSP, the first P2MP LSP and the second P2MP LSP sharing a label;
a label assigning unit, when the node is a sink node of the first P2MP LSP, for assigning, in an upstream link of the node, a first label to the first P2MP LSP if the second P2MP LSP has the first label in an upstream link of the node; for assigning, in the upstream link of the node, a second label to the first P2MP LSP if the second P2MP LSP does not have a label in the upstream link of the node; for sending a second message to the upstream node, the second message carrying the label which is assigned to the first P2MP LSP in the upstream link of the node;
when the node is an intermediate node of the first P2MP LSP, for sending the first message to a downstream node and receiving a third message from the downstream node the third message carrying the label which is assigned to the upstream link of the downstream node by the downstream node; for assigning, in the upstream link of the node, a third label to the first P2MP LSP if the second P2MP LSP has the third label in the upstream link of the node; for assigning, in the upstream link of the node, a fourth label to the first P2MP LSP if the second P2MP LSP does not have a label in the upstream link of the node; and for sending a fourth message to the upstream node, the fourth message carrying the label which is assigned to the first P2MP LSP in the upstream link of the node.

A system for setting up a first P2MP LSP, characterized by comprising:
a source node for sending a first message to a downstream node, the first message including identification information of a second P2MP LSP and the first message requesting for setting up the first P2MP LSP, the first P2MP LSP and the second P2MP LSP sharing a label, and for receiving a fifth message from the downstream node, the fifth message carrying a label which is assigned to its upstream link by the downstream node; and
a sink node for receiving a first message from an upstream node; for assigning, in an upstream link of the node, a first label to the first P2MP LSP if the second P2MP LSP has the first label in the upstream link of the node; for assigning, in the upstream link of the node, a second label to the first P2MP LSP if the second P2MP LSP does not have a label in the upstream link of the node; and for sending a second message to the upstream node, the second message carrying the label which is assigned to the first P2MP LSP in the upstream link of the node.

The embodiments of the present invention are carried out by receiving a first message from an upstream node, the first message including identification information of a second LSP, and the first message requesting for setting up the first LSP, the first LSP and the second LSP sharing a label; when the node is a sink node, assigning, in the upstream link of the node, a first label to the first LSP if the second LSP has the first label in an upstream link of the node; assigning, in the upstream link of the node, a second label to the first LSP if the second LSP does not have a label in the upstream link of the node; sending a second message to the upstream node, the second message carrying the label which is assigned to the first LSP in the upstream link of the node; when the node is an intermediate node, sending the first message to a downstream node and receiving a third message from the downstream node, the third message carrying the label which is assigned to its upstream link by the downstream node; assigning, in the upstream link of the node, a third label to the first LSP if the second LSP has the third label in the upstream link of the node; assigning, in the upstream link of the node, a fourth label to the first LSP if the second LSP does not have a label in the upstream link of the node; and sending a fourth message to the upstream node, the fourth message carrying the label which is assigned to the first LSP in the upstream link of the node. If the second LSP has a label in the upstream link of the node, the same label is assigned to the first LSP in the upstream link of the node. Accordingly, the operations to a label forwarding table is reduced, and the upstream node of the node needs to encapsulate only one MPLS header and send one encapsulated data message to the node, thereby avoiding waste of bandwidth and saving the cost.

### BRIEF DESCRIPTION OF DRAWINGS

In order to describe the embodiments of the present application or the technical solutions in the existing technologies more clearly, the drawings to be referred to in depictions of the embodiments and the existing technologies are briefly introduced below. Obviously, the drawings depicted below are only some embodiments disclosed in the present invention. An ordinary skilled person in the art can obtain other drawings based on these drawings without inventive efforts.
FIG. 1 is a schematic diagram of an LSP in the existing technologies;
FIG. 2 is a flowchart of a method for setting up a first LSP according to an embodiment of the present invention;
FIG. 3 is a flowchart of another method for setting up a first LSP according to an embodiment of the present invention;
FIG. 4 is a diagram of a network architecture according to an embodiment of the present invention;
FIG. 5 is a schematic diagram of a working P2MP LSP according to an embodiment of the present invention;
FIG. 6 is a schematic diagram of a protecting P2MP LSP according to an embodiment of the present invention;
FIG. 7 is a flow chart of another method for setting up a first LSP according to an embodiment of the present invention;
FIG. 8 is a structural diagram of a device for setting up a first LSP according to an embodiment of the present invention;
FIG. 9 is a structural diagram of a system for setting up a first LSP according to the embodiment of the present invention;
FIG. 10 is a structural diagram of another system for setting up a first LSP according to an embodiment of the present invention.

### DESCRIPTION OF EMBODIMENTS

The technical solutions in the embodiments of the present invention will be depicted clearly and completely with reference to the drawings in the embodiments of the present invention. Obviously, the depicted embodiments are only part rather than all of the embodiments of the present invention. Based on the embodiments in the present invention, all the other embodiments that can be obtained by an ordinary skilled in the art without inventive efforts shall fall into the scope claimed in the present invention.

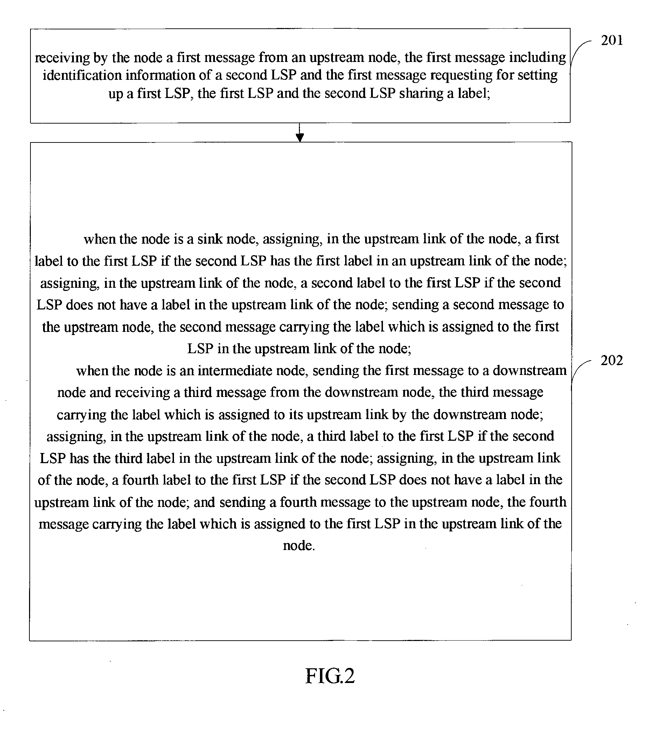

As shown in FIG. 2, a method for setting up a first LSP according to the embodiment of the present invention includes the steps as described below.

Step S201: a node receives a first message from an upstream node, the first message includes identification information of a second LSP, the first message requests for setting up a first LSP, the first LSP and the second LSP share a label.

In the present embodiment, the first message is a Path message, the second LSP is P2MP LSP, the first LSP includes at least one sink node, the Path message carries identification information of the sink node and can further carry the path information of the first LSP. In other embodiments, the path of the first LSP can be determined node by node, i.e., the node that receives the Path message determines its downstream node according to the identification information of the sink node and forwards the Path information to the downstream node. In further embodiments, the first LSP and the second LSP can alternatively be P2P LSP.

Step S202: when the node is a sink node, in the upstream link of the node, the first label is assigned to the first LSP if the second LSP has a first label in an upstream link of the node; in the upstream link of the node, a second label is assigned to the first LSP if the second LSP does not have a label in the upstream link of the node; a second message is sent to the upstream node, the second message carries the label which is assigned to the first LSP in the upstream link of the node; when the node is a intermediate node, the first message is sent to a downstream node and a third message is received from the downstream node, the third message carries the label which is assigned to its upstream link by the downstream node; in the upstream link of the node, the third label is assigned to the first LSP if the second LSP has a third label in the upstream link of the node; in the upstream link of the node, a fourth label is assigned to the first LSP if the second LSP does not have a label in the upstream link of the node; and a fourth message is sent to the upstream node, the fourth message carries the label which is assigned to the first LSP in the upstream link of the node.

In the present embodiment, if the second LSP has a label in the upstream link of the node, in the upstream link of the node, the same label is assigned to the first LSP. Accordingly, the operations to a label forwarding table is reduced, and the upstream node of the node needs to encapsulate only one MPLS header and send one encapsulated data message to the node, thereby avoiding wasting of bandwidth and saving the cost.

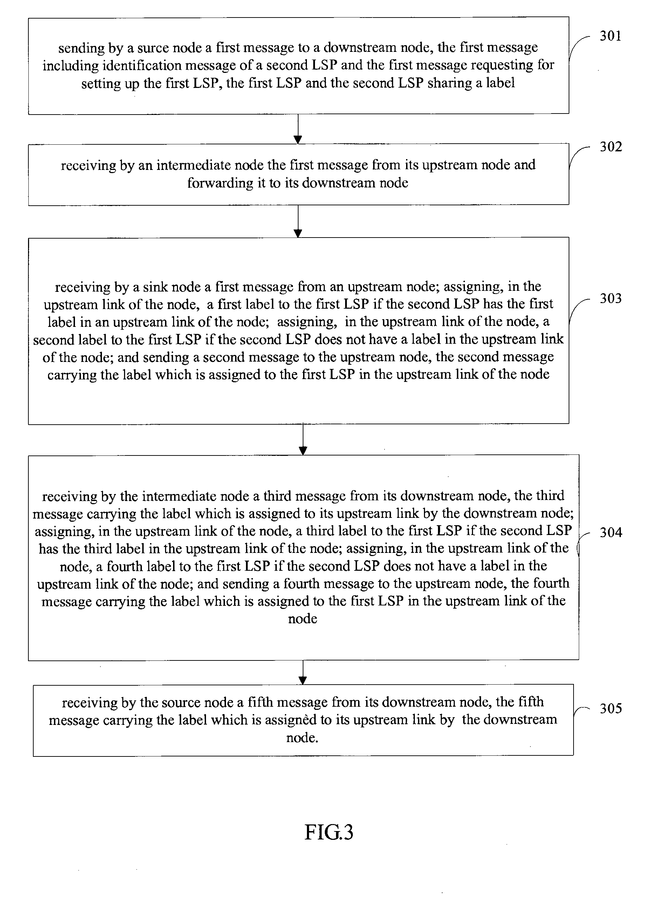

As shown in FIG. 3, a method for setting up a first LSP according to the present embodiment of the invention includes the steps as described below.

Step S301: a source node sends a first message to a downstream node, the first message includes identification message of a second LSP, and the first message requests for setting up the first LSP, the first LSP and the second LSP shares a label.

Step S302: an intermediate node receives the first message from its upstream node and forwards it to its downstream node.

Step S303: a sink node receives the first message from its upstream node; in the upstream link of the node, the first label is assigned to the first LSP if the second LSP has a first label in an upstream link of the node; in the upstream link of the node, a second label is assigned to the first LSP if the second LSP does not have a label in the upstream link of the node; a second message is sent to the upstream node, the second message carries the label which is assigned to the first LSP in the upstream link of the node.

Step S304: the intermediate node receives a third message from its downstream node, the third message carries the label which is assigned to its upstream link by the downstream node; in the upstream link of the node, the third label is assigned to the first LSP if the second LSP has a third label in the upstream link of the node; in the upstream link of the node, a fourth label is assigned to the first LSP if the second LSP does not have a label in the upstream link of the node; the fourth message is sent to the upstream node, the fourth message carries the label which is assigned to the first LSP in the upstream link of the node.

Step S305: the source node receives a fifth message from its downstream node, the fifth message carries the label which is assigned to its upstream link by the downstream node.

Upon the source node receives the label in the fifth message, setting up of the first LSP is completed. Each intermediate node of the first LSP forwards the received message according to the assigned label.

In the present embodiment, if the second LSP has a label in the upstream link of the node, in the upstream link of the node, the same label is assigned to the first LSP thereby reducing the operations to a label forwarding table. The upstream node of the node needs to encapsulate only one MPLS header and send one encapsulated data message to the node, thereby avoiding a waste of bandwidth and saving cost.

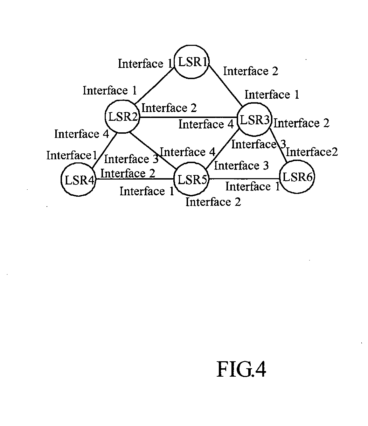

As shown in FIG. 4, a diagram of a network architecture according to the present embodiment of the invention comprises six LSRs, i.e., LSR1 to LSR6. A P2MP LSP with LSR1 as the root and LSR4/LSR5/LSR6 as leaves, as well as one protecting P2MP LSP need to be set up. In the case where the working and protecting P2MP LSPs are set up respectively via a signaling protocol, when the second P2MP LSP is set up, it is designated in the signaling message that it shares the label with the first P2MP LSP. For example, in the case where the working P2MP LSP is set up first, it is designated in the signaling message, when the protecting P2MP LSP is set up later, that it shares the label with the working P2MP LSP. In the case where the protecting P2MP LSP is set up first, it is designated in the signaling message, when the working P2MP LSP is set up later, that it shares the label with the protecting P2MP LSP. The present solution of the invention is described with a specific example below. The case where the working P2MP LSP is set up first is taken as an example, and the case where the protecting P2MP LSP is set up first is similar.

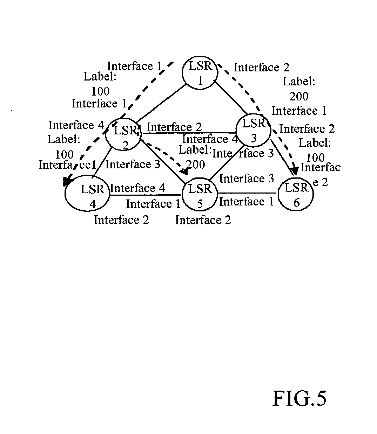

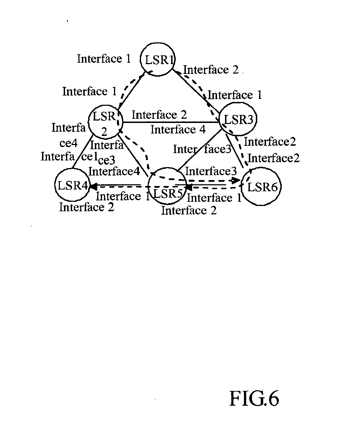

It is assumed that the working P2MP LSP has been set up. As shown in FIG. 5, the working P2MP LSP is marked by a dashed line and the assigned label is also marked. It is assumed that the serial number of the working P2MP LSP is 1. As shown in FIG. 6, the protecting P2MP LSP to be set up is marked by a dashed line in FIG. 6. The process of setting up is described below taking setting up the branch from LSR1 to LSR5 as an example.

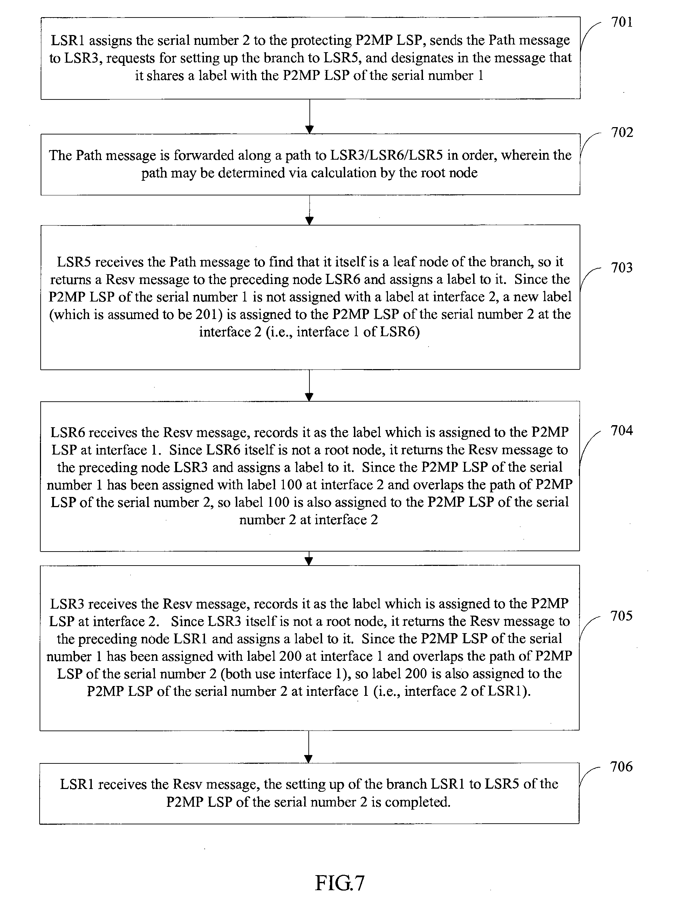

As shown in FIG. 7, a method for setting up a first LSP according to the present embodiment of the invention includes the steps as described below.

Step S701: LSR1 assigns the serial number 2 to the protecting P2MP LSP, sends the Path message to LSR3, requests for setting up the branch to LSR5, and designates in the message that it shares a label with the P2MP LSP of the serial number 1.

Step S702: the Path message is forwarded along a path to LSR3/LSR6/LSR5 in order, wherein the path may be determined via calculation by the root node or on a node-by- node basis, i.e., each node determines only a next node according to the leaf node.

Step S703: LSR5 receives the Path message to find that it itself is a leaf node of the branch, so it returns a Resv message to the preceding node LSR6 and assigns a label to it. Since the P2MP LSP of the serial number 1 is not assigned with a label at interface 2, a new label (which is assumed to be 201) is assigned to the P2MP LSP of the serial number 2 at the interface 2 (i.e., interface 1 of LSR6).

Step S704: LSR6 receives the Resv message, records it as the label assigned to the P2MP LSP at interface 1. Since LSR6 itself is not a root node, it returns the Resv message to the preceding node LSR3 and assigns a label to it. Since the P2MP LSP of the serial number 1 has been assigned with label 100 at interface 2 and overlaps the P2MP LSP of the serial number 2 (both use interface 2), so label 100 is also assigned to the P2MP LSP of the serial number 2 at interface 2 (i.e., interface 2 of LSR3).

Step S705: LSR3 receives the Resv message, records it as the label assigned to the P2MP LSP at interface 2. Since LSR3 itself is not a root node, it returns the Resv message to the preceding node LSR1 and assigns a label to it. Since the P2MP LSP of the serial number 1 has been assigned with label 200 at interface 1 and overlaps the P2MP LSP of the serial number 2 (both use interface 1), so label 200 is also assigned to the P2MP LSP of the serial number 2 at interface 1 (i.e., interface 2 of LSR1).

Step S706: LSR1 receives the Resv message, the setting up of the branch LSR1 to LSR5 of the P2MP LSP of the serial number 2 is completed.

The branch from LSR1 to LSR4 may be set up simultaneously with the branch from LSR1 to LSR5. At this point, in the aforesaid step 1, LSR1 sends the Path message to LSR3, wherein the message includes the leaf node identifiers of the two branches LSR4 and LSR5 indicating that two branches LSR4 and LSR5 need to be set up. The two branches belong to the same P2MP LSP, and are in the common path LSR1-LSR3-LSR6-LSR5, so labels need to be assigned only once during this section. LSR4 further needs to assign a label (which is assumed to be 201) to the branch LSR1 to LSR4 at interface 2.

Setting up of the branch from LSR1 to LSR6 is similar to the above, and needs to share a label with the P2MP LSP of the serial number 1 in LSR1-LSR2-LSR5.

The protecting P2MP LSP (blue) shares a label in a portion that overlaps the working P2MP LSP. So in the portion where paths overlap, only one data message will be sent, thereby avoiding a waste of bandwidth.

For a 1+1 protection and a 1:1 protection, LSR5/LSR6 processes differently. In the case of a 1+1 protection, LSR5 needs to forward the data message of the label 200 from interface 4 to interface 2, and change the label into 201; LSR6 needs to forward the data message of the label 100 from interface 2 to interface 1, and change the label into 201. In the case of a 1:1 protection, normally LSR5 does not need to forward the data message of the label 200 from interface 4 to interface 2; only when the leaf LSR6 detects a failure in the working path (LSR1-LSR3-LSR6), it informs LSR5 to activate the protecting path by using a overhead of a data plane, i.e., LSR5 needs to forward the data message of the label 200 from interface 4 to interface 2, and change the label into 201 so that LSR6 can receive a data message from interface 1.

In order to implement the signaling process of setting up the P2MP LSP according to the present solution of the invention, the existing P2MP LSP signaling message should be correspondingly extended. In setting up the second P2MP LSP, the Path message needs to designate sharing a label with the first P2MP LSP. The function can be realized via adding a flag bit into the Flags field in the Session Attribute Object of the Path message. For example, the L flag bit is added into the Flags field in the object shown in Table 1, when the L flag bit is 1, it indicates a need to share the label with a designated LSP, the identifier of which may be carried by an ASSOCIATION object.

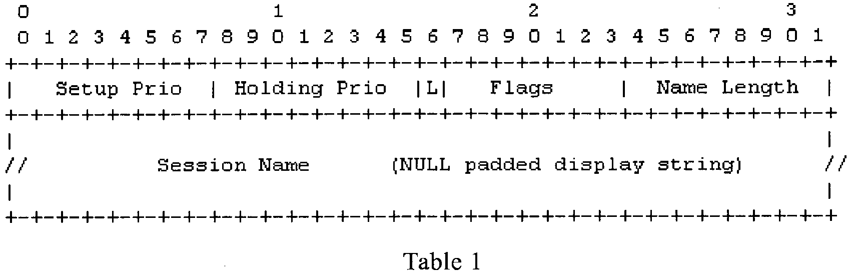

The aforesaid method of sharing a label can also be applied to a P2P LSP, e.g., in occasions of rerouting, modifying the bandwidth, and so on for a P2P LSP. In both occasions, another P2P LSP needs to be set up and then the old P2P LSP is removed. Therefore, when setting up another P2P LSP, it may be designated that it shares a label with the old P2P LSP so that in a portion where two LSPs overlap, the label of the old P2P LSP is used as far as possible, thereby reducing the operations to the label forwarding table. The process is similar with the process of setting up the P2MP LSP branch.

In the present embodiment, if the working P2MP LSP has a label in an upstream link of the node, in the upstream link of the node, the same label is assigned to the protecting P2MP LSP, thereby reducing the operations to the label forwarding table. The upstream node of the node needs to encapsulate only one MPLS header and send one encapsulated data message to the node, thereby avoiding a waste of bandwidth and saving cost.

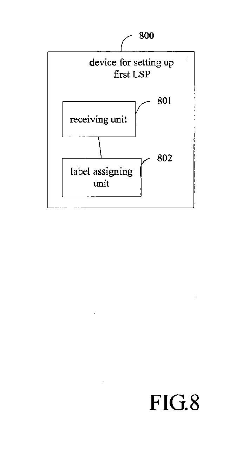

As shown in FIG. 8, the device 800 for setting up a first LSP according to the present embodiment of the invention comprises:
a receiving unit 801 for receiving a first message from an upstream node, the first message including identification information of a second LSP, and the first message requesting for setting up the first LSP, the first LSP and the second LSP sharing a label;
a label assigning unit 802, when the node is a sink node, for assigning, in the upstream link of the node, the first label to the first LSP if the second LSP has a first label in an upstream link of the node; for assigning, in the upstream link of the node, a second label to the first LSP if the second LSP does not have a label in the upstream link of the node; for sending a second message to the upstream node,
the second message carries the label which is assigned to the first LSP in the upstream link of the node; when the node is an intermediate node, for sending the first message to a downstream node and receiving a third message from the downstream node, the third message carries the label which is assigned to its upstream link by the downstream node; for assigning, in the upstream link of the node, a third label to the first LSP if the second LSP has the third label in the upstream link of the node; for assigning, in the upstream link of the node, a fourth label to the first LSP if the second LSP does not have a label in the upstream link of the node; and for sending a fourth message to the upstream node, the fourth message carries the label which is assigned to the first LSP in the upstream link of the node.

Therein, the first LSP comprises at least one sink node, and the first message received by receiving unit 801 includes identification information of the at least one sink node.

The first message received by the receiving unit 801 may include information of the downstream node.

In the present embodiment, if the second LSP has a label in an upstream link of the node, in the upstream link of the node, the same label is assigned to the first LSP, thereby reducing the operations to the label forwarding table. The upstream node of the node needs to encapsulate only one MPLS header and send one encapsulated data message to the node, thereby avoiding a waste of bandwidth and saving cost.

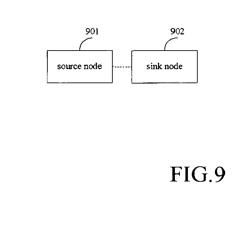

As shown in FIG. 9, a system for setting up a first LSP according to the present embodiment of the invention comprises:
a source node 901 for sending a first message to a downstream node, the first message including identification information of a second LSP and the first message requesting for setting up the first LSP, the first LSP and the second LSP sharing a label, and for receiving a fifth message from the downstream node, the fifth message carrying a label which is assigned to its upstream link by the downstream node;
a sink node 902 for receiving a first message from an upstream node; for assigning, in the upstream link of the node, a first label to the first LSP if the second LSP has the first label in an upstream link of the node; and for assigning, in the upstream link of the node, a second label to the first LSP if the second LSP does not have a label in the upstream link of the node; for sending a second message to the upstream node, the second message carrying the label which is assigned to the first LSP in the upstream link of the node.

In one embodiment, the downstream node of the source node is the sink node.

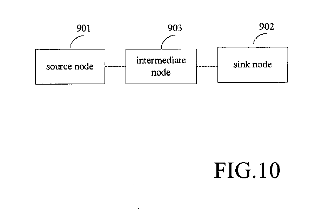

In another embodiment, as shown in FIG. 10, an intermediate node 903 is included between the source node 901 and the sink node 902. The intermediate node 903 is for receiving a first message from the upstream node; for sending the first message to the downstream node; for receiving a third message from the downstream node, the third message carrying the label which is assigned to its upstream link by the downstream node; for assigning, in the upstream link of the node, a third label to the first LSP if the second LSP has the third label in the upstream link of the node; for assigning, in the upstream link of the node, a fourth label to the first LSP if the second LSP does not have a label in the upstream link of the node; and for sending to the upstream node a fourth message, the fourth message carrying the label which assigned to the first LSP in the upstream link of the node.

In the present embodiment, if the second LSP has a label in an upstream link of the node, in the upstream link of the node, the same label is assigned to the first LSP, thereby reducing the operations to the label forwarding table. The upstream node of the node needs to encapsulate only one MPLS header and send one encapsulated data message to the node, thereby avoiding a waste of bandwidth and saving cost.

The embodiments of the device and the system described above are only exemplary, wherein units described as separate parts can be separated physically or not, the parts displayed as units can be physical units or not (i.e., can be disposed in one location or distributed among a plurality of network elements). Part or all of the modules can be selected for fulfilling the object of the solutions of the embodiments dependent on actual requirements. An ordinary skilled in the art can understand and carry out the invention without inventive efforts.

Via the above descriptions of the modes of carrying out the invention, those skilled in the art can appreciate clearly that each mode of carrying out the invention can be realized by use of software plus necessary universal hardware platforms or surely by use of hardware. Based on such understanding, the essence or the portion that contributes to the existing technologies of the aforesaid technical solution can be reflected in the form of a software product. The computer software product can be stored in a computer-readable memory medium, such as a ROM/RAM, disc, optical disc, and so on, including several instructions for enabling a computer device (which may be a personal computer, server, or network device, and so on) to perform the method according to each embodiment or some portions of the embodiments.

Finally it should be noted that the above embodiments are only for describing the technical solution of the present invention rather than limiting it. Although the present invention is described in detail with reference to the above embodiments, an ordinary skilled person in the art should understand that he can make alterations to the technical solutions in each of the above embodiments or equivalent substitutions for parts of technical features therein. But these alterations or substitutions do not cause the essence of the corresponding technical solutions to deviate from the scope of the technical solution of each embodiment of the present invention.

## Claims

1. A method for setting up a first Point to Multi-Point Label Switch Path, P2MP LSP, **characterized by** comprising:
receiving (201), by a node, a first message from an upstream node, the first message including identification information of a second P2MP LSP, and the first message requesting for setting up the first P2MP LSP, the first P2MP LSP and the second P2MP LSP sharing a label;
when the node is a sink node of the first P2MP LSP, assigning, by the sink node, in an upstream link of the node, a first label to the first P2MP LSP if the second P2MP LSP has the first label in the upstream link of the node; assigning, by the sink node, in the upstream link of the node, a second label to the first P2MP LSP if the second P2MP LSP does not have the label in the upstream link of the node; sending, by the sink node, a second message to the upstream node, the second message carrying the label which is assigned to the first P2MP LSP in the upstream link of the node;
when the node is an intermediate node of the first P2MP LSP, sending, by the intermediate node, the first message to a downstream node, and receiving, by the intermediate node, a third message from the downstream node, the third message carrying the label which is assigned to the upstream link of the downstream node by the downstream node; assigning, by the intermediate node, in the upstream link of the node, a third label to the first P2MP LSP if the second P2MP LSP has the third label in the upstream link of the node; assigning, by the intermediate node, in the upstream link of the node, a fourth label to the first P2MP LSP if the second P2MP LSP does not have a label in the upstream link of the node; and sending, by the intermediate node, a fourth message to the upstream node, the fourth message carrying the label which is assigned to the first P2MP LSP in the upstream link of the node (202).

2. The method according to claim 1, **characterized in that** the first P2MP LSP comprises at least one sink node, and the first message includes identification information of the at least one sink node.

3. A node for setting up a first Point to Multi-Point Label Switch Path, P2MP LSP, **characterized by** comprising:
a receiving unit (801) for receiving a first message from an upstream node, the first message including identification information of a second P2MP LSP and the first message requesting for setting up the first P2MP LSP, the first P2MP LSP and the second P2MP LSP sharing a label;
a label assigning unit (802), when the node is a sink node of the first P2MP LSP, for assigning, in an upstream link of the node, a first label to the first P2MP LSP if the second P2MP LSP has the first label in an upstream link of the node; for assigning, in the upstream link of the node, a second label to the first P2MP LSP if the second P2MP LSP does not have a label in the upstream link of the node; for sending a second message to the upstream node, the second message carrying the label which is assigned to the first P2MP LSP in the upstream link of the node; when the node is an intermediate node of the first P2MP LSP, for sending the first message to a downstream node and receiving a third message from the downstream node, the third message carrying the label which is assigned to the upstream link of the downstream node by the downstream node; for assigning, in the upstream link of the node, a third label to the first P2MP LSP if the second P2MP LSP has the third label in the upstream link of the node; for assigning, in the upstream link of the node, a fourth label to the first P2MP LSP if the second P2MP LSP does not have a label in the upstream link of the node; and for sending a fourth message to the upstream node, the fourth message carrying the label which is assigned to the first P2MP LSP in the upstream link of the node.

4. The node according to claim 3, **characterized in that** the first P2MP LSP comprises at least one sink node, and the first message received by the receiving unit includes identification information of the at least one sink node.

5. A system for setting up a first Point to Multi-Point Label Switch Path, P2MP LSP, **characterized by** comprising:
a source node (901) for sending a first message to a downstream node, the first message including identification information of a second P2MP LSP and the first message requesting for setting up the first P2MP LSP, the first P2MP LSP and the second P2MP LSP sharing a label, and for receiving a fifth message from the downstream node, the fifth message carrying a label which is assigned to its upstream link by the downstream node; and
a sink node (902) for receiving a first message from an upstream node; for assigning, in an upstream link of the node, a first label to the first P2MP LSP if the second P2MP LSP has the first label in the upstream link of the node; for assigning, in the upstream link of the node, a second label to the first P2MP LSP if the second P2MP LSP does not have a label in the upstream link of the node; and for sending a second message to the upstream node, the second message carrying the label which is assigned to the first P2MP LSP in the upstream link of the node.

6. The system according to claim 5, **characterized in that** the downstream node of the source node is the sink node.

7. The system according to claim 5, **characterized in that** an intermediate node (903) is included between the source node and the sink node, and the intermediate nodes is for receiving the first message from the upstream node and sending the first message to the downstream node; for receiving a third message from the downstream node, the third message carrying the label which is assigned to its upstream link by the downstream node; for assigning, in the upstream link of the node, a third label to the first P2MP LSP if the second P2MP LSP has the third label in the upstream link of the node; for assigning, in the upstream link of the node, a fourth label to the first P2MP LSP if the second P2MP LSP does not have a label in the upstream link of the node; and for sending a fourth message to the upstream node, the fourth message carrying the label which is assigned to the first P2MP LSP in the upstream link of the node.

## Patentansprüche

1. Verfahren zum Aufbauen eines ersten Punkt-zu-Mehrpunkt-Etikettvermittlungspfads (Point to Multi-Point Label Switch Path, P2MP-LSP), **dadurch gekennzeichnet, dass** es Folgendes umfasst:
Empfangen (201) durch einen Knoten einer ersten Nachricht von einem stromaufwärts gelegenen Knoten, wobei die erste Nachricht Identifikationsinformationen über einen zweiten P2MP-LSP enthält, und die erste Nachricht das Aufbauen des ersten P2MP-LSP anfordert, wobei der erste P2MP-LSP und der zweite P2MP-LSP ein Etikett gemeinsam verwenden;
wenn der Knoten ein Senkenknoten des ersten P2MP-LSP ist, Zuweisen durch den Senkenknoten in einer Aufwärtsverbindungsstrecke des Knotens eines ersten Etiketts zu dem ersten P2MP-LSP, falls der zweite P2MP-LSP das erste Etikett in der Aufwärtsverbindungsstrecke des Knotens aufweist; Zuweisen durch den Senkenknoten in der Aufwärtsverbindungsstrecke des Knotens eines zweiten Etiketts zu dem ersten P2MP-LSP, falls der zweite P2MP-LSP nicht das Etikett in der Aufwärtsverbindungsstrecke des Knotens aufweist; Senden durch den Senkenknoten einer zweiten Nachricht zu dem stromaufwärts gelegenen Knoten, wobei die zweite Nachricht das Etikett führt, das dem ersten P2MP-LSP in der Aufwärtsverbindungsstrecke des Knotens zugewiesen ist;
wenn der Knoten ein Zwischenknoten des ersten P2MP-LSP ist, Senden durch den Zwischenknoten der ersten Nachricht zu einem stromabwärts gelegenen Knoten und Empfangen durch den Zwischenknoten einer dritten Nachricht von dem stromabwärts gelegenen Knoten, wobei die dritte Nachricht das Etikett führt, das der Aufwärtsverbindungsstrecke des stromabwärts gelegenen Knotens durch den stromabwärts gelegenen Knoten zugewiesen ist; Zuweisen durch den Zwischenknoten in der Aufwärtsverbindungsstrecke des Knotens eines dritten Etiketts zu dem ersten P2MP-LSP, falls der zweite P2MP-LSP das dritte Etikett in der Aufwärtsverbindungsstrecke des Knotens aufweist; Zuweisen durch den Zwischenknoten in der Aufwärtsverbindungsstrecke des Knotens eines vierten Etiketts zu dem ersten P2MP-LSP, falls der zweite P2MP-LSP nicht ein Etikett in der Aufwärtsverbindungsstrecke des Knotens aufweist; und Senden durch den Zwischenknoten einer vierten Nachricht zu dem stromaufwärts gelegenen Knoten, wobei die vierte Nachricht das Etikett führt, das dem ersten P2MP-LSP in der Aufwärtsverbindungsstrecke des Knotens zugewiesen ist (202).

2. Verfahren nach Anspruch 1, **dadurch gekennzeichnet, dass** der erste P2MP-LSP wenigstens einen Senkenknoten umfasst und die erste Nachricht Identifikationsinformationen über den wenigstens einen Senkenknoten enthält.

3. Knoten zum Aufbauen eines ersten Punkt-zu-Mehrpunkt-Etikettvermittlungspfads, P2MP-LSP, **dadurch gekennzeichnet, dass** er Folgendes umfasst:
eine Empfangseinheit (801) zum Empfangen einer ersten Nachricht von einem stromaufwärts gelegenen Knoten, wobei die erste Nachricht Identifikationsinformationen über einen zweiten P2MP-LSP enthält und die erste Nachricht das Aufbauen des ersten P2MP-LSP anfordert, wobei der erste P2MP-LSP und der zweite P2MP-LSP ein Etikett gemeinsam verwenden;
eine Etikettenzuweisungseinheit (802), wenn der Knoten ein Senkenknoten des ersten P2MP-LSP ist, zum Zuweisen in einer Aufwärtsverbindungsstrecke des Knotens eines ersten Etiketts zu dem ersten P2MP-LSP, falls der zweite P2MP-LSP das erste Etikett in einer Aufwärtsverbindungsstrecke des Knotens aufweist; zum Zuweisen in der Aufwärtsverbindungsstrecke des Knotens eines zweiten Etiketts zu dem ersten P2MP-LSP, falls der zweite P2MP-LSP nicht ein Etikett in der Aufwärtsverbindungsstrecke des Knotens aufweist; zum Senden einer zweiten Nachricht zu dem stromaufwärts gelegenen Knoten, wobei die zweite Nachricht das Etikett führt, das dem ersten P2MP-LSP in der Aufwärtsverbindungsstrecke des Knotens zugewiesen ist; wenn der Knoten ein Zwischenknoten des ersten P2MP-LSP ist, zum Senden der ersten Nachricht zu einem stromabwärts gelegenen Knoten und Empfangen einer dritten Nachricht von dem stromabwärts gelegenen Knoten, wobei die dritte Nachricht das Etikett führt, das der Aufwärtsverbindungsstrecke des stromabwärtsgelegenen Knoten durch den stromabwärts gelegenen Knoten zugewiesen ist; zum Zuweisen in der Aufwärtsverbindungsstrecke des Knotens eines dritten Etiketts zu dem ersten P2MP-LSP, falls der zweite P2MP-LSP das dritte Etikett in der Aufwärtsverbindungsstrecke des Knotens aufweist; zum Zuweisen in der Aufwärtsverbindungsstrecke des Knotens eines vierten Etiketts zu dem ersten P2MP-LSP, falls der zweite P2MP-LSP nicht ein Etikett in der Aufwärtsverbindungsstrecke des Knotens aufweist; und zum Senden einer vierten Nachricht zu dem stromaufwärts gelegenen Knoten, wobei die vierte Nachricht das Etikett führt, das dem ersten P2MP-LSP in der Aufwärtsverbindungsstrecke des Knotens zugewiesen ist.

4. Knoten nach Anspruch 3, **dadurch gekennzeichnet, dass** der erste P2MP-LSP wenigstens einen Senkenknoten umfasst und die erste Nachricht, die durch die Empfangseinheit empfangen wird, Identifikationsinformationen über den wenigstens einen Senkenknoten enthält.

5. System zum Aufbauen eines ersten Punkt-zu-Mehrpunkt-Etikettvermittlungspfads, P2MP-LSP, **dadurch gekennzeichnet, dass** er Folgendes umfasst:
einen Quellenknoten (901) zum Senden einer ersten Nachricht zu einem stromabwärts gelegenen Knoten, wobei die erste Nachricht Identifikationsinformationen über einen zweiten P2MP-LSP enthält und die erste Nachricht das Aufbauen des ersten P2MP-LSP anfordert, wobei der erste P2MP-LSP und der zweite P2MP-LSP ein Etikett gemeinsam verwenden, und zum Empfangen einer fünften Nachricht von dem stromabwärts gelegenen Knoten, wobei die fünfte Nachricht ein Etikett führt, das seiner Aufwärtsverbindungsstrecke durch den stromabwärts gelegenen Knoten zugewiesen ist; und
einen Senkenknoten (902) zum Empfangen einer ersten Nachricht von einem stromaufwärts gelegenen Knoten; zum Zuweisen in einer Aufwärtsverbindungsstrecke des Knotens eines ersten Etiketts zu dem ersten P2MP-LSP, falls der zweite P2MP-LSP das erste Etikett in der Aufwärtsverbindungsstrecke des Knotens aufweist; zum Zuweisen in der Aufwärtsverbindungsstrecke des Knotens eines zweiten Etiketts zu dem ersten P2MP-LSP, falls der zweite P2MP-LSP nicht ein Etikett in der Aufwärtsverbindungsstrecke des Knotens aufweist; und zum Senden einer zweiten Nachricht zu dem stromaufwärts gelegenen Knoten, wobei die zweite Nachricht das Etikett führt, das dem ersten P2MP-LSP in der Aufwärtsverbindungsstrecke des Knotens zugewiesen ist.

6. System nach Anspruch 5, **dadurch gekennzeichnet, dass** der stromabwärts gelegene Knoten des Quellenknotens der Senkenknoten ist.

7. System nach Anspruch 5, **dadurch gekennzeichnet, dass** ein Zwischenknoten (903) zwischen dem Quellenknoten und dem Senkenknoten enthalten ist und der Zwischenknoten dem Empfangen der ersten Nachricht von dem stromaufwärts gelegenen Knoten und Senden der ersten Nachricht zu dem stromabwärts gelegenen Knoten; dem Empfangen einer dritten Nachricht von dem stromabwärts gelegenen Knoten, wobei die dritte Nachricht das Etikett führt, das seiner Aufwärtsverbindungsstrecke durch den stromabwärts gelegenen Knoten zugewiesen ist; zum Zuweisen in der Aufwärtsverbindungsstrecke des Knotens eines dritten Etiketts zu dem ersten P2MP-LSP, falls der zweite P2MP-LSP das dritte Etikett in der Aufwärtsverbindungsstrecke des Knotens aufweist; dem Zuweisen in der Aufwärtsverbindungsstrecke des Knotens eines vierten Etiketts zu dem ersten P2MP-LSP, falls der zweite P2MP-LSP nicht ein Etikett in der Aufwärtsverbindungsstrecke des Knotens aufweist; und dem Senden einer vierten Nachricht zu dem stromaufwärts gelegenen Knoten, wobei die vierte Nachricht das Etikett führt, das dem ersten P2MP-LSP in der Aufwärtsverbindungsstrecke des Knotens zugewiesen ist, dient.

## Revendications

1. Procédé d'établissement d'un premier chemin de commutation d'étiquettes point-multipoint, P2MP LSP, **caractérisé en ce qu'**il comprend :
la réception (201), par un noeud, d'un premier message depuis un noeud amont, le premier message comportant des informations d'identification d'un second P2MP LSP, et le premier message demandant l'établissement du premier P2MP LSP, le premier P2MP LSP et le second P2MP LSP partageant une étiquette ;
quand le noeud est un noeud d'arrivée du premier P2MP LSP, l'attribution, par le noeud d'arrivée, dans une liaison amont du noeud, d'une première étiquette au premier P2MP LSP si le second P2MP LSP a la première étiquette dans la liaison amont du noeud ; l'attribution, par le noeud d'arrivée, dans la liaison amont du noeud, d'une deuxième étiquette au premier P2MP LSP si le second P2MP LSP n'a pas l'étiquette dans la liaison amont du noeud ; l'envoi, par le noeud d'arrivée, d'un deuxième message au noeud amont, le deuxième message incluant l'étiquette qui est attribuée au premier P2MP LSP dans la liaison amont du noeud ;
quand le noeud est un noeud intermédiaire du premier P2MP LSP, l'envoi, par le noeud intermédiaire, du premier message à un noeud aval, et la réception, par le noeud intermédiaire, d'un troisième message depuis le noeud aval, le troisième message incluant l'étiquette qui est attribuée à la liaison amont du noeud aval par le noeud aval ; l'attribution, par le noeud intermédiaire, dans la liaison amont du noeud, d'une troisième étiquette au premier P2MP LSP si le second P2MP LSP a la troisième étiquette dans la liaison amont du noeud ; l'attribution, par le noeud intermédiaire, dans la liaison amont du noeud, d'une quatrième étiquette au premier P2MP LSP si le second P2MP LSP n'a pas d'étiquette dans la liaison amont du noeud ; et l'envoi, par le noeud intermédiaire, d'un quatrième message au noeud amont, le quatrième message incluant l'étiquette qui est attribuée au premier P2MP LSP dans la liaison amont du noeud (202).

2. Procédé selon la revendication 1, **caractérisé en ce que** le premier P2MP LSP comprend au moins un noeud d'arrivée, et le premier message comporte des informations d'identification de l'au moins un noeud d'arrivée.

3. Noeud d'établissement d'un premier chemin de commutation d'étiquettes point-multipoint, P2MP LSP, **caractérisé en ce qu'**il comprend :
une unité de réception (801) destinée à recevoir un premier message depuis un noeud amont, le premier message comportant des informations d'identification d'un second P2MP LSP, et le premier message demandant l'établissement du premier P2MP LSP, le premier P2MP LSP et le second P2MP LSP partageant une étiquette ;
une unité d'attribution d'étiquette (802), quand le noeud est un noeud d'arrivée du premier P2MP LSP, destinée à attribuer, dans une liaison amont du noeud, une première étiquette au premier P2MP LSP si le second P2MP LSP a la première étiquette dans une liaison amont du noeud ; attribuer, dans la liaison amont du noeud, une deuxième étiquette au premier P2MP LSP si le second P2MP LSP n'a pas d'étiquette dans la liaison amont du noeud ; envoyer un deuxième message au noeud amont, le second message incluant l'étiquette qui est attribuée au premier P2MP LSP dans la liaison amont du noeud ; quand le noeud est un noeud intermédiaire du premier P2MP LSP, envoyer le premier message à un noeud aval et recevoir un troisième message depuis le noeud aval, le troisième message incluant l'étiquette qui est attribuée à la liaison amont du noeud aval par le noeud aval ; attribuer, dans la liaison amont du noeud, une troisième étiquette au premier P2MP LSP si le second P2MP LSP a la troisième étiquette dans la liaison amont du noeud ; attribuer, dans la liaison amont du noeud, une quatrième étiquette au premier P2MP LSP si le second P2MP LSP n'a pas d'étiquette dans la liaison amont du noeud ; et envoyer un quatrième message au noeud amont, le quatrième message comportant l'étiquette qui est attribuée au premier P2MP LSP dans la liaison amont du noeud.

4. Noeud selon la revendication 3, **caractérisé en ce que** le premier P2MP LSP comprend au moins un noeud d'arrivée, et le premier message reçu par l'unité de réception comporte des informations d'identification de l'au moins un noeud d'arrivée.

5. Système d'établissement d'un premier chemin de commutation d'étiquettes point-multipoint, P2MP LSP, **caractérisé en ce qu'**il comprend :
un noeud source (901) destiné à envoyer un premier message à un noeud aval, le premier message comportant des informations d'identification d'un second P2MP LSP, et le premier message demandant l'établissement du premier P2MP LSP, le premier P2MP LSP et le second P2MP LSP partageant une étiquette, et recevoir un cinquième message depuis le noeud aval, le cinquième message incluant une étiquette qui est attribuée à sa liaison amont par le noeud aval ; et
un noeud d'arrivée (902) destiné à recevoir un premier message depuis un noeud amont ; attribuer, dans une liaison amont du noeud, une première étiquette au premier P2MP LSP si le second P2MP LSP a la première étiquette dans une liaison amont du noeud ; attribuer, dans la liaison amont du noeud, une deuxième étiquette au premier P2MP LSP si le second P2MP LSP n'a pas d'étiquette dans la liaison amont du noeud ; et envoyer un deuxième message au noeud amont, le deuxième message incluant l'étiquette qui est attribuée au premier P2MP LSP dans la liaison amont du noeud.

6. Système selon la revendication 5, **caractérisé en ce que** le noeud aval du noeud source est le noeud d'arrivée.

7. Système selon la revendication 5, **caractérisé en ce qu'**un noeud intermédiaire (903) est inclus entre le noeud source et le noeud d'arrivée et le noeud intermédiaire est destiné à recevoir le premier message depuis le noeud amont et envoyer le premier message au noeud aval ; recevoir un troisième message depuis le noeud aval, le troisième message incluant l'étiquette qui est attribuée à la liaison amont par le noeud aval ; attribuer, dans la liaison amont du noeud, une troisième étiquette au premier P2MP LSP si le second P2MP LSP a la troisième étiquette dans la liaison amont du noeud ; attribuer, dans la liaison amont du noeud, une quatrième étiquette au premier P2MP LSP si le second P2MP LSP n'a pas d'étiquette dans la liaison amont du noeud ; et envoyer un quatrième message au noeud amont, le quatrième message comportant l'étiquette qui est attribuée au premier P2MP LSP dans la liaison amont du noeud.
